# EUROPÄISCHE PATENTANMELDUNG

(11) **EP 1 005 173 A2**
(43) Veröffentlichungstag der Anmeldung: **31.05.2000**
(21) Anmeldenummer: 99123313.1
(22) Anmeldetag: 22.11.1999
(51) Int. Cl.: H04B 3/56

(54) **Datenübertragungssystem unter Verwendung von abgeschirmten Leistungskabeln**

(30) Priorität: 23.11.1998 DE 19853976
(71) Anmelder: Hecht, Reinhard, 93047 Regensburg (DE); Manstorfer, Karl, 93047 Regensburg (DE)
(72) Erfinder: Hecht, Reinhard, 93047 Regensburg (DE); Manstorfer, Karl, 93047 Regensburg (DE)
(74) Vertreter: Patentanwälte Schaad, Balass, Menzl & Partner AG

(57) **Zusammenfassung**

Das System dient zur Übertragung von Daten über vorhandene Energiekabel, die streckenweise drei durchgehende elektrisch leitende Kabelschirme aufweisen. Eine Station (10; 20), die an ein Ende des Energiekabels angeschlossen ist, umfasst einen symmetrischen Übertrager (15; 25), dessen Primärwicklung (16; 26) für eine Signalankopplung vorgesehen ist. Die Sekundärwicklung (17; 27) des Übertragers (15; 25), deren Enden die Anschlüsse (11, 13; 21, 23) für zwei Kabelschirme (1; 3) bilden, weist eine mittlere symmetrische Anzapfung auf, die den Anschluss (12; 22) für den anderen Kabelschirm (2) bildet und an Erde gelegt ist. Dies erbringt im allgemeinen eine Verbesserung des Signal-/Störabstandes von etwa 15 db. Im Tonfrequenzbereich können noch viel bessere Werte erreicht werden, was eine sehr gute Übertragung ermöglicht.

## Beschreibung

Die Erfindung betrifft ein Datenübertragungssystem unter Verwendung von Kabeln nach dem Oberbegriff des Patentanspruchs 1.

Zur Übertragung von Daten über Energiekabel können sogenannte Ankoppelungsschaltungen eingesetzt werden, die die Schnittstellen zwischen den eigentlichen Übertragungsgeräten und den Energiekabeln bilden.

Eine derartige Ankopplungsschaltung ist in der Patentanmeldung EP-98 111 483.8-2211 vom 03.07.1997 angegeben, in der ein System zur Datenübertragung über die Schirme zweier Energiekabel bzw. zweier Leiter eines Mehrphasen-Übertragungsnetzes beschrieben wird. Gemäss diesem System sind zur Entkopplung der hochfrequenten Datensignale die Enden der Schirme beider Energiekabel über je eine als Tiefpass wirkende Impedanz mit dem Erdpotential verbunden. Ein solches System erlaubt zwar eine breitbandige Übertragung von Daten in einem Bereich mit einer unteren Grenzfrequenz von ca. 0,5 MHz, erweist sich jedoch als nachteilig im Hinblick darauf, dass die teilweise relativ hohen auf den Kabelschirmen einwirkenden Störspannungen die Datenübertragung erschweren.

Es ist daher Aufgabe der Erfindung, ein System zur Übertragung von Daten unter Verwendung von vorzugsweise vorhandenen Energiekabeln zu schaffen, das auch bei Einwirkung von Störungen eine Datenübertragung hoher Qualität erlaubt.

Diese Aufgabe wird in vorteilhafter Weise erfindungsgemäss durch ein. Datenübertragungssystem nach Patentanspruch 1 gelöst.

Dies erbringt im allgemeinen eine Verbesserung des Signal/Störabstandes von etwa 15 db. Im Tonfrequenzbereich können noch viel bessere Werte erreicht werden, was sehr gute Übertragungsergebnisse ermöglicht.

Andere vorteilhafte Ausführungen der Erfindung ergeben sich aus den weiteren abhängigen Ansprüchen.

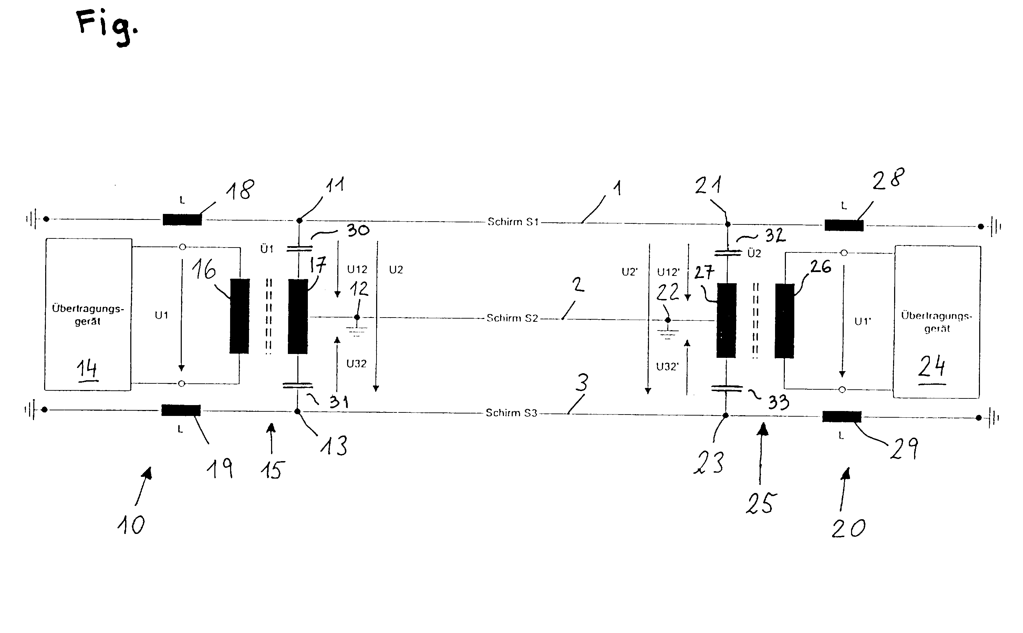

Ein Beispiel der Erfindung wird nachfolgend an Hand einer Zeichnung näher erläutert, wobei die einzige Figur eine schematische Darstellung eines Datenübertragungssystems nach der Erfindung zeigt.

Das in der Figur dargestellte System arbeitet unter Verwendung von drei relativ langen unter sich isolierten Kabelschirmen bzw. Leitungsschirmen 1, 2, 3 von Energiekabeln, beispielsweise eines dreiphasigen Stromkabels. Das System umfasst zwei Stationen 10, 20, wobei die erste (10) drei Anschlüsse 11, 12, 13 und die zweite (20) drei Anschlüsse 21, 22, 23 aufweist. Der Schirm 1 ist in dem einen Endbereich mit dem Anschluss 11 und in dem anderen Endbereich mit dem Anschluss 22 verbunden. Die Enden des Schirms 2 sind entsprechend mit den Anschlüssen 12 bzw. 22 und die Enden des Schirms 3 mit den Anschlüssen 13 bzw. 23 verbunden. Die Station 10 umfasst nebst einem Übertragungsgerät 14 erfindungsgemäss auch einen vorzugsweise hochsymmetrischen Transformator oder Übertrager 15, dessen Primärwicklung 16 an das Übertragungsgerät 14 angeschlossen ist. Die Enden der Sekundärwicklung 17 des Übertragers 15 bilden die Anschlüsse 11 und 13 der Station 10. Die Sekundärwicklung 17 des Übertragers 15 weist eine mittlere Anzapfung auf, die den Anschluss 12 der Station 10 bildet und an Erde gelegt ist. Entsprechendes gilt für die mit entsprechenden weiteren Elementen 24 bis 27 versehene Station 20. Der Schirm 2 wird daher als Erdbezugsleiter verwendet.

Die Anschlüsse 11 und 13 der Station 10 können über je eine Induktivität 18 bzw. 19 mit Erde verbunden sein. Entsprechendes gilt für zwei weitere Induktivitäten 28 bis 29, mit denen die Station 20 versehen sein kann.

Das erfindungsgemässe System funktioniert folgendermassen:

Störspannungen werden von externen Quellen, beispielsweise Funksendern, und internen Störquellen, wie Generatoren oder Verbraucher, erzeugt. Soweit die betreffenden Störspannungen symmetrisch in bezug auf jedes Kabel oder jede Leitung sind, was häufig vorkommt, stehen sie bei einer bestimmten betrachteten Frequenz mit nahezu gleicher Amplitude und Phasenlage zwischen den zur Übertragung verwendeten Leitern, vorzugsweise den Schirmen 1, 2 und 3 und Erde.

Legt man nun einen Schirm, beispielsweise den Schirm 2, auf Erde, was energietechnisch ohnehin erforderlich ist, so stehen gegen diesen Bezugspunkt entgegengesetzt gleich grosse Spannungen, beispielsweise die Spannungen U12 und U32 (vgl. Figur). Sie erzeugen an der Sekundärwicklung des Übertragers Ströme und magnetische Flüsse, welche einander entgegen gerichtet sind und sich deshalb praktisch aufheben.

Die so kompensierten Störspannungen U12 und U32 erscheinen an der Primärseite des Übertragers deshalb nicht oder nur sehr stark abgeschwächt. Somit werden (theoretisch) alle Spannungskomponenten gegen Erde kompensiert. Wird zusätzlich an der Primärseite 16 eine Nutzspannung U1 angelegt, so wird diese wie gewünscht in die Nutzspannung U2 an der Sekundärseite 17 des Übertragers 15 transformiert.

Entsprechendes gilt für die Station 20, insbesondere für die Spannungen U12', U32' bzw. U1' und U2'. Von den zwei Übertragern 15, 25 wird neben der Störspannungskompensation gleichzeitig die Anpassung zwischen Geräteinnenwiderstand und Wellenwiderstand der Schirme 1, 2 und 3 erbracht, was bezüglich der praktischen Anwendung sehr effektiv ist. Die Stationen 10 und 20 an den Endbereichen des Energiekabels können im allgemeinen Terminals mit jeweils einer nachrichtentechnischen Ankopplung für ein hochfrequentes Datenübertragungssignal sein.

Ein Kabel oder Energiekabel kann wie bei der eingangs erwähnten Patentanmeldung ausgebildet sein. Ein Energiekabel oder Stromkabel kann jedoch beispielsweise auch drei isolierte Phasenleiter mit je einem Phasenleiterschirm umfassen.

Die beschriebene Ankopplungsschaltung eignet sich in hervorragender Weise für die Übertragung von Signalen in einem Frequenzbereich zwischen Tonfrequenz und ca. 0,5 MHz. Übertragungen im Frequenzbereich bis zu einigen MHz sind ebenfalls gut möglich. Sie ist für den Einsatz auf Kabeln und Leitern bzw. Leitungen aller Spannungsebenen geeignet. Als Tonfrequenzbereich wird der Frequenzbereich von ca. 20 Hz bis ca. 20 kHz betrachtet.

Die Ankopplungsschaltung ist, insbesondere auch bezüglich der Störspannungskompensation, auf Steuerkabel übertragbar, die mit Steuerspannungen beschaltet sind. Statt der beiden Schirme 1 und 3 werden dann zwei Adern des Steuerkabels verwendet. Eine dritte Ader oder die Zusammenfassung mehrerer Adern dient als Bezugsleiter.

Bei der praktischen Realisierung soll ein möglichst symmetrischer Aufbau für alle drei Phasen angestrebt werden. Vorzugsweise wird ein gemeinsamer fester Bezugspunkt gebildet, wobei dann dort und nur dort alle Erden angeschlossen werden. Die Induktivitäten 18, 19 und/oder 28, 29 können paarweise beispielsweise 5 mH-Sperren sein, die in ein Gehäuse, aber möglichst entkoppelt aufgebaut werden können. Bei hochsymmetrischem Aufbau ist es auch möglich, einen gemeinsamen Ferrit-Ring als Wickelkörper für die Induktivitäten 18, 19 und/oder 28, 29 zu verwenden.

An Stelle der Induktivitäten 18, 19 bzw. 28, 29 können auch Filter eingesetzt werden, die für energietechnische Ströme, insbesondere mit einer Frequenz von 50 Hz oder 60 Hz, praktisch einen Kurzschluss bilden, für höherfrequente Signale aber möglichst grosse Sperrwerte aufweisen.

Zur Sperrung von energietechnischen Strömen im Frequenzbereich von 50 Hz bis 60 Hz werden die Sekundärwicklungen 17, 27 der Übertrager 15 und 25 in einer vorzugsweisen Ausgestaltung zudem über Kondensatoren 30, 31 bzw. 32, 33 mit den entsprechenden Anschlüssen 11, 13 bzw. 21, 23 verbunden. Für die Kondensatoren 30, 31 bzw. 32, 33 werden beispielsweise Werte im Bereich von 4,7 µF gewählt. Grundsätzlich werden die Werte der Induktivitäten und Kondensatoren jedoch derart gewählt, dass nachrichtentechnische Ströme praktisch ungedämpft übertragen werden, während der Zufluss energietechnischer Ströme zu den Übertragern 15 und 25 unterbunden wird.

## Patentansprüche

1. System zur Datenübertragung unter Verwendung von Kabeln, die mindestens streckenweise wenigstens einen durchgehenden elektrisch leitenden Schirm aufweisen, mit jeweils einer Ankopplung für ein Datenübertragungssignal in einem an das Kabel angeschlossenen Terminal, **dadurch gekennzeichnet**, dass für die Ankopplung des Datenübertragungssignals im Terminal (10; 20) ein symmetrischer Übertrager (15; 25) vorgesehen ist.

2. System nach Anspruch 1, **dadurch gekennzeichnet**, dass der symmetrische Übertrager (15; 25) eine Primärwicklung (16; 26) für eine Signalankopplung im Terminal (10; 20) umfasst, dass die Enden der Sekundärwicklung (17; 27) die Anschlüsse (11, 13; 21, 23) für zwei Schirme (1, 3) bilden, und dass die Sekundärwicklung (17; 27) eine mittlere symmetrische Anzapfung aufweist, die den Anschluss (12; 22) für einen weiteren Schirm (2) bildet.

3. System nach Anspruch 2, **dadurch gekennzeichnet**, dass die mittlere Anzapfung der Sekundärwicklung (17; 27) des Übertragers (15; 25) an Erde bzw. an ein Bezugspotential gelegt ist.

4. System nach einem der Ansprüche 1 bis 3, **dadurch gekennzeichnet**, die Enden (11, 13; 21, 23) der Sekundärwicklung (17; 27) des Übertragers (15; 25) über je eine Induktivität (18, 19; 28, 29) an Erde bzw. an das Bezugspotential angelegt sind und/oder dass die Übertrager (15, 25) über Kondensatoren (30, 31 bzw. 32, 33) an die Schirme (1, 3) angeschlossen.

5. System nach einem der Ansprüche 1 bis 4, **dadurch gekennzeichnet**, dass es für die Übertragung von Signalen in einem Frequenzbereich zwischen 500 Hz und 500 kHz oder bis zu einigen MHz ausgebildet ist.

6. System nach Anspruch 4 oder 5, **dadurch gekennzeichnet**, dass die Induktivitäten (18, 19; 28, 29) 5 mH-Sperren sind.

7. System nach einem der Ansprüche 3 bis 6, **dadurch gekennzeichnet**, dass die Induktivitäten (18, 19; 28, 29) paarweise weitgehend entkoppelt in einem Gehäuse unterbegracht sind.

8. System nach Anspruch 7, **dadurch gekennzeichnet**, dass bei hochsymmetrischem Aufbau ein gemeinsamer Ferrit-Ring als Wickelkörper verwendet wird.

9. System nach einem der Ansprüche 1 bis 8, **dadurch gekennzeichnet**, dass die Primärwicklung (16; 26) des symmetrischen Übertragers (15; 25) an ein Übertragungsgerät (14; 24) angeschlossen ist.

10. System nach einem der Ansprüche 1 bis 9, **dadurch gekennzeichnet**, dass in jedem Terminal (10; 20) ein gemeinsamer fester Bezugspunkt (12; 22) gebildet ist, an den alle Erden angeschlossen werden.

11. System zur Datenübertragung unter Verwendung von Steuerkabeln, die mindestens streckenweise wenigstens eine durchgehende elektrisch leitende Ader aufweisen, mit jeweils einer Ankopplung für ein Datenübertragungssignal in einem an das Steuerkabel angeschlossenen Terminal, **dadurch gekennzeichnet**, dass für die Ankopplung des Datenübertragungssignals im Terminal (10; 20) ein symmetrischer Übertrager (15; 25) vorgesehen ist, der eine Primärwicklung (16; 26) für eine Signalankopplung im Terminal (10; 20) umfasst, dass die Enden der Sekundärwicklung (17; 27) die Anschlüsse (11, 13; 21, 23) für zwei Adern (1, 3) bilden, und dass die Sekundärwicklung (17; 27) eine mittlere symmetrische Anzapfung aufweist, die den Anschluss (12; 22) für eine oder mehrere weitere Adern (2) bildet.
